# DEMANDE DE BREVET EUROPEEN

(11) **EP 2 725 526 A1**
(43) Date de publication de la demande: **30.04.2014**
(21) Numéro de dépôt: 12306343.0
(22) Date de dépôt: 29.10.2012
(51) Int. Cl.: G06K 19/077

(54) **Carte à puce comprenant un lecteur de carte USB intégré**

(71) Demandeur: Gemalto SA, 92190 Meudon (FR)
(72) Inventeur: Thill, Michel, 92190 Meudon (FR); Marseille, François-Xavier, 92190 Meudon (FR); Gravez, Pierre, 92190 Meudon (FR)
(74) Mandataire: Cour, Pierre

(57) **Abrégé**

La carte à puce (1, 2) comporte une première puce (P1) et un connecteur (12) compatible de la norme ISO 7816 et dont deux contacts (C4, C8) sont compatibles de la norme USB, caractérisée en ce que la carte à puce (1, 2) comprend une seconde puce (P2) comprenant une première interface USB et une seconde interface ISO, la seconde puce (P2) étant connectée :
● d'une part au connecteur 12 au moyen d'une première liaison (16) permettant le transfert de trames USB et ;
● d'autre part à la première puce (P1) au moyen d'une seconde liaison (33, 34, 35) permettant le transfert de trames ISO, la seconde puce (P2).

La seconde puce (P2) comprend en outre un calculateur permettant :
● de décoder des trames de données USB provenant des contacts du connecteur (12) et transitant par la première liaison (16) ;
● de réémettre lesdites données décodées dans des trames ISO à la première puce (12) par la seconde liaison (33, 34, 35).

## Description

### DOMAINE

La présente invention se rapporte au domaine technique des cartes à puces comportant au moins une interface USB. Plus particulièrement, le domaine de l'invention concerne les cartes à puces permettant de sécuriser et partager des données au moyen d'une interface USB.

### ETAT DE L'ART

La standardisation ISO a défini la possibilité d'avoir sur les contacts normalisés C4 et C8 d'une carte à puce une connexion USB. Cette standardisation a été étendue par l'ETSI en 2005 afin d'offrir l'opportunité d'amener le protocole et la connectique USB sur les cartes Sim avec une mémoire de stockage plus importante que les mémoires du marché. L'augmentation de l'espace de stockage visée permet de larges variétés d'applications. Notamment, cette augmentation a permis un passage de 1 méga octets de mémoire à plusieurs giga octets de mémoire.

Le fait d'augmenter de façon très significative la quantité de mémoire a permis d'imposer d'avoir un lien d'échange plus rapide que le lien ISO 7816 des cartes à puce déjà existantes qui étaient limitées jusque-là à quelques centaines de Kbits/s. La connectique USB répond à cette exigence de rapidité et permet également d'établir un lien peu gourmand en nombre de fils. Notamment deux fils suffisent, ce qui présente l'avantage de consommer que deux points de contacts d'une puce de carte à puce.

Des prototypes de circuits intégrés cartes à puce embarquant une interface USB en plus de l'interface ISO traditionnel ont été construits durant cette période, puis peu à peu abandonnés devant l'absence de succès des cartes SIM avec une large mémoire.

En outre, on connait également des cartes à puces avec écran. Ces cartes à puces peuvent comprendre un contrôleur d'affichage et peuvent s'interfacer avec une puce sécurisée d'une carte à puce. Généralement, le contrôleur permet de récupérer des données au format ISO 7816 mais non sécurisées par exemple d'un circuit intégré d'une carte bancaire et de s'interfacer avec un afficheur intégré dans la carte à puce. C'est le cas de la carte bancaire décrite dans la demande WO 2011/151309 où l'écran d'affichage permet l'affichage de transactions sauvegardées dans la puce sécurisée au moyen d'un microcontrôleur qui réalise une fonction de lecteur de carte.

Ces dernières cartes à puces, comprenant un écran, permettent d'envisager de nouvelles applications notamment en ce qui concerne les cartes bancaires.

Dans ces nouvelles applications, une problématique est de permettre une communication entre ladite carte avec d'autres supports électroniques que les traditionnels terminaux de commerçants, les terminaux de paiement ou encore des distributeurs de billets.

Notamment, une problématique d'interopérabilité est de réaliser une connexion entre la carte à puce et tout équipement comportant une connexion USB.

Aujourd'hui un problème des solutions existantes est qu'il n'est pas possible dans ce dernier cas de communiquer autrement que par l'interface ISO 7816 avec le microcontrôleur sécurisé depuis un PC ou une tablette, ce qui implique qu'il est nécessaire de recourir à un lecteur de carte adapté pour gérer une connexion avec le microcontrôleur notamment avec tous les équipements nécessitant un accès direct à ce dernier.

### RESUME DE L'INVENTION

L'invention permet de résoudre les inconvénients précités.

Un objet de l'invention concerne une carte à puce comportant une première puce et un connecteur compatible de la norme ISO 7816 et dont deux contacts sont compatibles de la norme USB. En outre, la carte à puce comprend une seconde puce comprenant au moins une première interface USB et une seconde interface ISO.

La seconde puce est connectée :
- d'une part au connecteur au moyen d'une première interface comportant au moins une liaison permettant le transfert de trames USB et ;
- d'autre part à la première puce au moyen d'une seconde interface comportant au moins une liaison permettant le transfert de trames ISO.

Dans un mode de l'invention, la seconde puce comprend un calculateur permettant :
- de décoder des trames de données USB provenant des contacts du connecteur et transitant par la première liaison ;
- de réémettre lesdites données décodées dans des trames ISO à la première puce par la seconde liaison.

Dans un mode de réalisation, la première puce est connectée à l'interface ISO externe via les contacts C1, C5 pour l'alimentation et les contacts C2, C3, C7 pour l'interface ISO 7816. La seconde puce est connectée à l'interface ISO externe via les contacts : C1, C5 également pour alimentation et les contacts C4, C8 pour l'interface USB.

Une telle carte comporte l'avantage d'être compatible d'une connectique USB en intégrant la possibilité de déchiffrer des données provenant d'un port USB et d'en extraire une partie de manière à les transmettre à la puce de la carte à puce sous forme de trames ISO.

Dans un mode de réalisation, la seconde puce comprend un calculateur permettant de « désencapsuler » des trames de données USB transmises par le système extérieur tel qu'un PC ou une tablette, et de réémettre lesdites données dans des trames ISO à la première puce.

En outre, la seconde puce permet de recevoir les trames ISO provenant de la première puce et de les encapsuler en trames USB pour les envoyer à un système extérieur.

Un avantage est de permettre d'intégrer dans la carte un lecteur de carte USB. Seule une connectique mécanique est nécessaire pour connecter les points de contacts USB du connecteur de la carte à puce à un équipement tiers tel qu'un PC par exemple.

Cette connectique physique peut être soit un câble d'adaptation du format USB vers le format ISO, soit une empreinte USB en bord de carte amovible ou fixe.

Avantageusement, la seconde puce est un microcontrôleur, ledit microcontrôleur comprenant une troisième interface avec un afficheur et une quatrième interface vers un actionneur permettant d'activer une commande d'un opérateur.

Avantageusement, le microcontrôleur comprend une cinquième interface vers un clavier numérique, ledit clavier numérique permettant de définir une commande numérique d'un opérateur.

Un avantage est de permettre l'affichage de trames USB reçues de l'extérieur, tel qu'un serveur distant et de « doubler » la sécurité d'une transaction par un premier code PIN local (connu de l'opérateur) et second code PIN transmis que l'opérateur doit rentrer une fois son affichage effectué.

Avantageusement, l'actionneur est un bouton marche/arrêt. Un tel bouton permet d'instancier un mode particulier pour sécuriser une transaction par exemple.

Avantageusement, le microcontrôleur peut être commandé par une commande du clavier numérique de manière à émettre des trames de données USB vers les contacts du connecteur au moyen de la première liaison, les dites données comprenant une consigne numérique.

Avantageusement, lorsque la dite carte est connectée via l'interface USB du connecteur, une action d'un opérateur sur l'actionneur de la carte permet la génération d'une requête USB du microcontrôleur vers un serveur distant.

Avantageusement, l'afficheur permet l'affichage de la commande numérique saisie par le clavier.

Avantageusement, l'afficheur permet l'affichage d'une consigne numérique encapsulée dans au moins une trame USB reçue par les connecteurs USB (C4, C8) du connecteur et provenant d'un serveur distant.

Avantageusement, l'afficheur permet l'affichage d'un code 2D.

### BREVES DESCRIPTION DES FIGURES

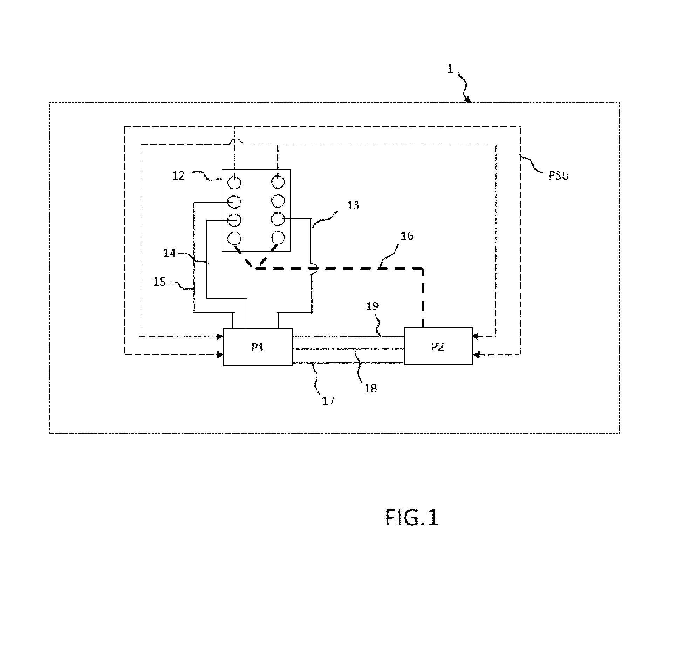

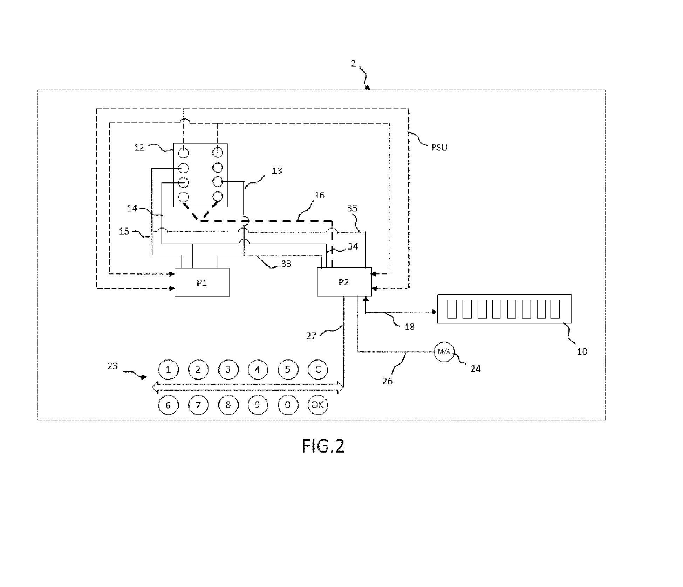

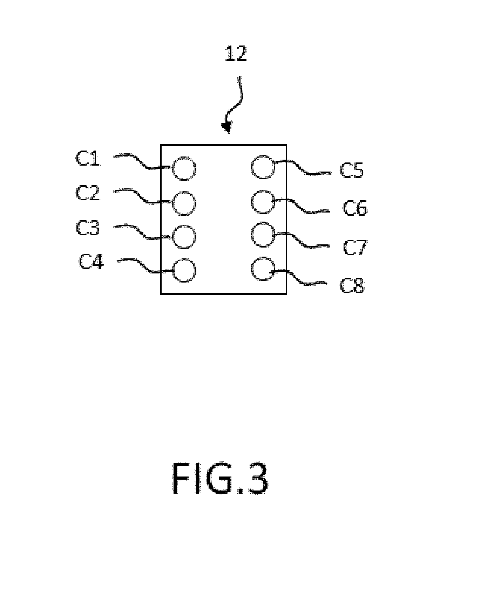

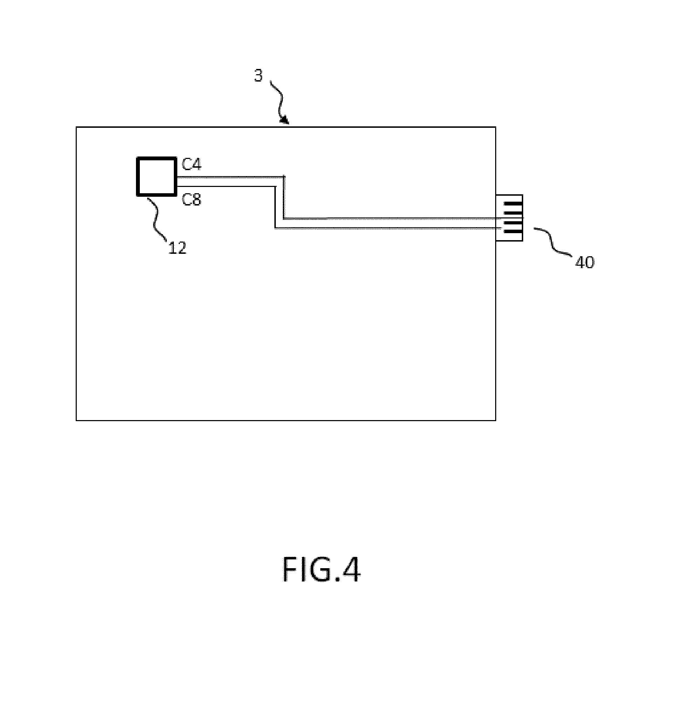

D'autres caractéristiques et avantages de l'invention ressortiront à la lecture de la description détaillée qui suit, en référence aux figures annexées, qui illustrent :
■ figure 1 : un schéma d'un mode de réalisation de l'invention comprenant une carte à puce dans laquelle une liaison USB avec le microcontrôleur est illustrée ;
■ figure 2 : un schéma d'une carte à puce de l'invention comprenant un afficheur et clavier intégrés ;
■ figure 3 : une représentation des connecteurs d'une puce d'une carte à puce ;
■ la figure 4 : un schéma d'une carte à puce de l'invention comprenant un connecteur USB intégré.

### DESCRIPTION

La figure 1 représente un premier mode de réalisation de l'invention dans lequel est représenté une carte à puce 1 comprenant une première puce P1 et une seconde puce P2 ainsi qu'un connecteur 12 comprenant 8 points de contacts. Le connecteur 12 comprend une interface mécanique USB comprenant deux points de contacts C4, C8 qui sont reliés à la seconde puce P2 au moyen d'une liaison de données 16.

La liaison de données 16 permet le transfert de données au format USB provenant d'un équipement extérieur connecté au connecteur 12 ou permet d'émettre ces données encapsulées au format USB vers ledit équipement tiers. Dans la figure 1, deux contacts C4, C8 (voir figure 3) de la puce sécurisée 12 sont câblées de manière à permettre une telle liaison 16 avec la seconde puce P2.

La carte à puce 1 de l'invention comprend une interface entre le connecteur 12 et la première puce P1 au moyen de trois liaisons 13, 14, 15 permettant le transfert de données encapsuler au format ISO 7816 entre la première puce P1 et un équipement extérieur connecté au connecteur 12. Notamment, la figure 1 prise en considérant la figure 3, permet de référencer les points de contacts du connecteur 12 qui est connecté à la première puce P1 : ce sont les points C2, C3 et C7 qui sont utilisés à cette fin.

La carte à puce de l'invention reste compatible avec des dispositifs de connexions de l'art antérieur s'interfaçant avec le connecteur 12. En effet, quand la carte 1 est branchée sur un dispositif traditionnel ISO, il n'y a rien à l'extérieur sur les connecteurs USB C4 et C8. Les puces P1 et P2 sont alimentées par les entrées C1, C5. Hors la puce P2 ne recevant rien sur les entrées USB reste en mode inactif sur son interface ISO, ce qui permet à la puce P1 de fonctionner correctement sur les interfaces ISO.

Un avantage de ce mode de réalisation est que :
- d'une part, des données au format USB arrivant d'un équipement extérieur peuvent être directement transmises à la seconde puce P2 qui peut extraire des données dans ce format ;
- d'autre part, des données au format ISO 7816 arrivant d'un équipement extérieur peuvent être directement transmises à la première puce P1 qui peut extraire des données dans ce format.

Par ailleurs, les données reçues par la seconde puce P2 ou des données issues d'un calcul effectué par la seconde puce P2 peuvent être transmises au format ISO 7816 à la première puce P1 au moyen d'une interface comprenant une liaison de données ISO 7816. Cette dernière liaison comprend trois liens dont les références sont notées sur la figure 1 : 17, 18 et19. Ces trois liens correspondent aux données transmises selon le protocole ISO 7816 qui sont le Reset, la Clock et l'interface I/O.

Lorsque la première puce P1 est un chip/puce de type EMV sécurisé et standardisé, les trois points de contacts ISO de la puce P1 sont câblés sur les trois liaisons 13, 14, 15 ainsi que sur les trois liaisons 17, 18, 19.

La seconde puce P2 est capable dans ce mode de réalisation de recevoir, décoder, émettre et coder des trames USB vers un équipement tiers connecté au connecteur 12 et de recevoir, décoder, émettre et coder des trames de données ISO 7816 vers la seconde puce P2.

Un avantage d'une telle carte à puce et de permettre d'éviter un branchement de la carte à puce 1 à un convertisseur de carte pour s'interfacer avec un équipement permettant le codage, le décodage et les transferts de données encapsulées au format USB.

Dans ce mode de réalisation, une simple connectique physique USB, encore appelée connectique « mécanique » USB dans la mesure où seuls des câbles de connexions adaptées suffisent, permettent de se connecter aux contacts C4 et C8 d'un connecteur 12 d'une telle carte à puce.

Une telle connexion mécanique permet de transférer des données USB d'une carte à puce P2 vers un équipement tiers, tel qu'un PC. Si les données USB sont reçues par la puce P1, les données peuvent être directement transférées de la puce P1 à la puce P2 par les liaisons 17, 18, 19 de la figure 1 ou 33, 34 et 35 de la figure 2. II est également possible d'établir la liaison inverse, c'est-à-dire de permettre la réception de données au format USB par la carte à puce 1 ou 2 et donc par la seconde puce P2 de ladite carte à puce.

La figure 3 illustre les points de contacts de C1 à C8 d'une puce ayant huit contacts et leurs références telles que définies dans la norme ISO 7816. C1 est le contact d'alimentation également noté VCC, C2 est le contact de remise à zéro, appelée RST, C3 est e contact d'horloge, noté également CLK, C4 est un des deux contacts USB inter-chip, il est noté D+. De l'autre côté du connecteur, on trouve C5 qui est le contact de masse, connu sous l'acronyme GND. C6 est le contact connu sous l'appellation « Single Wire Protocol », noté SWP, C7 et le contact d'entrée sorties des données, noté I/O et enfin C8 est le second contact USB inter-chip, noté D-.

Les points de contacts C4 et C8 supportant la connexion USB sont définis dans le standard ETSI TS 102.600.

La carte à puce 1 ou 2 peut également stocker des données au format USB dans la seconde puce P2 et rendre possible une exploitation de ces données ultérieurement. Notamment, lors des échanges de mot de passe ou de contrôle d'authentification lors de la connexion à un terminal comportant les deux interfaces USB et ISO 7816, il est alors possible de bénéficier d'une double interface permettant d'autoriser des échanges de contrôles.

La figure 2 représente un mode de réalisation dans lequel une carte à puce 2 comporte un connecteur 12, une première puce P1 identique à la première puce P1 de la figure 1 et une seconde puce P2 qui est un microcontrôleur permettant la gestion d'un afficheur 10, d'un clavier 23 et d'un bouton marche / arrêt 24.

Le microcontrôleur P2, intégré à la carte à puce P2, comporte une interface USB permettant d'assurer une connectique physique au moyen de la liaison 16 avec le connecteur 12. En outre, le microcontrôleur P2 comporte une interface ISO 7816 comportant trois liaisons de données 33, 34, 35 permettant le transfert de trames ISO 7816 entre la première puce P1 et la seconde puce P2.

Le microcontrôleur P2 comprend donc une interface ISO 7816 également avec le connecteur 12 via les points de contacts C2, C3 et C7, les liaisons pouvant être routées d'une part vers la puce P1 et/ou vers le connecteur 12. Ils peuvent donc être réalisés de manière à réaliser une seconde branche des liens 13, 14 et 15 qui sont eux connectés à la première puce P1 comme cela est représenté sur la figure 2.

Ce mode de réalisation permet d'acheminer les trames ISO 7816 du connecteur 12 vers le microcontrôleur P2. Ce dernier microcontrôleur P2 peut :
- soit acheminer ces trames sans analyse vers la puce P1 via les liaisons 33, 34 et 35
- soit interpréter les trames ISO 7816 au moyen de calculs effectués au sein du microcontrôleur P2 pour exploiter les données reçues.

De la même manière, lorsque les liens ISO 7816 : 33, 34 et 35 sont implémentés entre le microcontrôleur P2 et le connecteur 12, ils permettent l'émission de trames ISO soient provenant de la puce P1, soient générées par la puce P2 à partir de calculs effectués par le microcontrôleur P2.

Dans le mode de réalisation représenté à la figure 2, le microcontrôleur P2 comporte une interface assurant les échanges de données avec l'afficheur 10 au moyen d'une liaison 18. En outre, le microcontrôleur P2 comporte une autre interface assurant les échanges de données avec le clavier 23 au moyen d'une liaison 27. Enfin, une liaison 26 permet d'assurer les échanges d'informations d'un bouton M/A, noté 24 sur la figure 2, avec une autre interface du microcontrôleur P2.

Dans cette configuration, l'interface USB du microcontrôleur P2 permet en outre de communiquer avec un équipement extérieur connecté qui permet de rendre la carte à puce 2 dans un mode dit « en émulation de lecteur de carte ».

En outre, cette configuration permet d'avoir une communication entre l'afficheur 10 et la première puce P1 par l'intermédiaire de l'interface ISO entre les deux puces P1 et P2 tout en ayant une communication USB active. La carte à puce 2 de l'invention permet à l'afficheur 10 d'avoir accès à des informations sécurisées de la carte, par exemple en utilisant un code PIN externe, c'est-à-dire reçu d'un serveur distant par exemple, pour les dévoiler à l'utilisateur sans avoir à les faire remonter à un hôte non sécurisé.

La configuration de l'invention représentée à la figure 2 est particulièrement intéressante lorsqu'un code est transmis depuis un site, ou un serveur distant par exemple, lors d'une transaction via l'interface USB du connecteur 12 vers la seconde puce. Ce dernier peut être affiché sur l'afficheur 10 pour ensuite être ressaisi par l'opérateur utilisant sa carte à puce.

Dans ce dernier cas, le code est transmis via l'interface USB et le lien 16 au microcontrôleur P2. Ce dernier peut afficher le contenu du code transmis. Dans ce cas, l'utilisateur peut saisir sur le clavier le code affiché, le microcontrôleur P2 transmet alors le code saisi via l'interface ISO à la première puce P1 au moyen des liaisons 33, 34 35 connectées en parallèle. Ces connexions remplacent les liens 17, 18, 19 représentés à la figure 1. Cette dernière puce P1 peut alors effectuer un contrôle et autoriser un paiement.

Ce moyen permet de sécuriser des transactions via une double interface USB / ISO parallélisée entre les deux puces P1, P2. Ce moyen permet de sécuriser localement une transaction par l'intermédiaire d'un code PIN utilisateur conventionnel lors d'un paiement. En outre, ce moyen permet de sécuriser la liaison de transfert de données lors des émission(s)/ réception(s) de messages via le réseau.

La figue 4 représente une alternative de réalisation d'une carte à puce 3 de l'invention pouvant se combiner avec les caractéristiques de la carte 1 de la figure 1 ou de la carte 2 de la figure 2.

Dans cette alternative, un connecteur USB 40 est directement intégré à la carte à puce de l'invention, c'est-à-dire qu'il est solidaire de la carte 3. Le connecteur USB 40 est câblé au connecteur 12 par l'intermédiaire de deux liaisons permettant de s'interfacer avec les points de contacts C4 et C8 du connecteur 12.

Le connecteur USB 40 est compatible avec un câble conventionnel USB, il peut être de type « connecteur plat » tels que ceux qu'on trouve dans le commerce permettant de connecter un smart phone à une connectique USB.

Dans une seconde alternative de réalisation d'une carte à puce non représentée de l'invention pouvant se combiner avec les caractéristiques de la carte 1 de la figure 1 ou de la carte 2 de la figure 2, la carte peut être associée avec un porte-carte qui comprend d'une part une connectique intérieure permettant de se connecter aux points de contacts USB C4 et C8 et d'autre part de raccorder ces points de contacts via un câblage à un connecteur externe solidaire du porte-carte.

Le microcontrôleur P2 comprend donc des moyens de calculs tels qu'un calculateur et une mémoire permettant de décoder des trames USB et ISO et de les ré-encapsuler au format souhaité.

En outre, il est pratique selon cette configuration d'accéder au logiciel de gestion du microcontrôleur et de l'adapter et de le mettre à jour. Cela permet d'effectuer un suivi également local, c'est-à-dire dans la carte des opérations réalisées.

Enfin, la carte à puce de l'invention permet non seulement d'effectuer des transactions mais également de stocker via l'interface USB des reçus, des notes, des billets ou des tickets électroniques ou bien tout autre document électronique de n'importe quel format.

Par exemple, l'achat de billets sur internet via un PC peut être engagé au moyen de la carte à puce de l'invention avec des moyens simples de connexion de cette carte écran sur un PC.

Le fonctionnement suivant peut alors être engagé grâce à la carte à puce de l'invention :
■ Paiement en connectant la carte sur le PC avec le bénéfice de la sécurité du composant carte ;
■ Stockage sur la carte dans une zone sécurisée ;
■ Restitution du billet par le moyen de l'écran, ou de liaison sans contact au moment de l'utilisation du billet.

## Revendications

1. Carte à puce (1, 2) comportant une première puce (P1) reliée à un connecteur (12) compatible de la norme ISO 7816, **caractérisée en ce que** la carte à puce (1, 2) comprend une seconde puce (P2) comprenant une première interface USB (16) et une seconde interface ISO (33, 34, 35), la seconde puce (P2) étant connectée :
• d'une part, au connecteur (12) au moyen d'une première liaison (16) permettant le transfert de trames USB et ;
• d'autre part, à la première puce (P1) au moyen d'une seconde liaison (33, 34, 35) permettant le transfert de trames ISO.

2. Carte à puce (1, 2) selon la revendication 1, **caractérisée en ce que** la seconde puce (P2) comprend un calculateur permettant :
• de décoder des trames de données USB provenant des contacts du connecteur (12) et transitant par la première liaison (16) ;
• de réémettre lesdites données décodées dans des trames ISO à la première puce (12) par la seconde liaison (33, 34, 35).

3. Carte à puce (1, 2) selon l'une quelconque des revendications 1 à 2, **caractérisée en ce que** la seconde puce (P2) est un microcontrôleur, ledit microcontrôleur (P2) comprenant une troisième interface avec un afficheur (10) et une quatrième interface (26) vers un actionneur (24) permettant d'activer une commande d'un opérateur.

4. Carte à puce selon la revendication 3, **caractérisée en ce que** le microcontrôleur (P2) comprend une cinquième interface (27) vers un clavier numérique (23), ledit clavier numérique (23) permettant de définir une commande numérique d'un opérateur.

5. Carte à puce selon l'une quelconque des revendications 3 ou 4, **caractérisée en ce que** le microcontrôleur (P2) peut être commandé par une commande du clavier numérique (23) de manière à émettre des trames de données ISO vers le connecteur (12) au moyen d'une troisième liaison de données (33, 34, 35), les dites données comprenant une consigne numérique.

6. Carte à puce selon l'une quelconque des revendications 3 à 7, **caractérisée en ce que** lorsque la dite carte est connectée via l'interface USB du connecteur (12), la génération d'une requête USB du microcontrôleur (P2) vers un serveur distant est consécutive à la génération d'une requête de la puce P1 vers un serveur distant.

7. Carte à puce selon l'une quelconque des revendications 3 à 9, **caractérisée en ce que** l'afficheur (10) permet l'affichage d'une consigne numérique encapsulée dans au moins une trame USB reçue par les connecteurs USB (C4, C8) du connecteur (12) et provenant d'un serveur distant.

8. Carte à puce selon l'une quelconque des revendications 1 à 11, **caractérisée en ce que** la carte à puce (3) comprend un second connecteur USB (40), le dit connecteur USB (40) étant connecté d'une part aux points de contacts USB (C4, C8) du connecteur (12) par un câblage intégré à la carte à puce (3) et permettant d'autre part une connexion avec un équipement comprenant un connecteur USB adapté à coopérer avec le connecteur USB (40).
